# FASCICULE DE BREVET EUROPEEN

(11) **EP 1 497 885 B1**
(45) Date de publication et mention de la délivrance du brevet: **22.11.2006**
(21) Numéro de dépôt: 03717375.4
(22) Date de dépôt: 05.02.2003
(51) Int. Cl.: H01M 8/16

(54) **PILE A COMBUSTIBLE, UTILISANT DANS LE COMPARTIMENT CATHODIQUE ET EVENTUELLEMENT DANS LE COMPARTIMENT ANODIQUE DES ENZYMES DE TYPE OXYDOREDUCTASE**
BRENNSTOFFZELLE MIT OXIDOREDUKTASE-ENZYMEN IM KATHODERAUM ODER GGF. ANODENRAUM
FUEL CELL USING IN THE CATHODE COMPARTMENT AND OPTIONALLY IN THE ANODE COMPARTMENT OXYDOREDUCTASE ENZYMES

(30) Priorité: 07.02.2002 FR 0201488
(43) Date de publication de la demande: 19.01.2005
(73) Titulaire: COMMISSARIAT A L'ENERGIE ATOMIQUE, 75015 Paris (FR); CENTRE NATIONAL DE LA RECHERCHE SCIENTIFIQUE (CNRS), 75794 Paris Cedex 16 (FR)
(72) Inventeur: FERON, Damien, F-92260 FONTENAY AUX ROSES (FR); BERGEL, Alain, F-31500 TOULOUSE (FR)
(74) Mandataire: Poulin, Gérard
(86) Numéro de dépôt international: PCT/FR2003/000354
(87) Numéro de publication internationale: WO 2003/067697

(56) Documents cités:
- WO-A-00/22688
- US-A1- 2002 025 469
- US-B1- 6 294 281
- PATENT ABSTRACTS OF JAPAN vol. 006, no. 147 (E-123), 6 août 1982 (1982-08-06) -& JP 57 069668 A (MATSUSHITA ELECTRIC IND CO LTD), 28 avril 1982 (1982-04-28)
- G. TAYHAS AND AL: "electro-enzymatic reduction of dioxagen to water in the cathode compartment of a biofuel cell" JOURNAL OF ELECTROANALYTICAL CHEMISTRY, vol. 464, 1999, pages 110-117, XP002221000 cité dans la demande
- E. KATZ AND AL: "A biofuel cell based on two immiscible solvents and glucose oxidase and microperoxidase-11 monolayer-functionalized electrodes" NEW JOURNAL OD CHEMISTRY, 1999, pages 481-487, XP002221001 cité dans la demande

## Description

### DOMAINE TECHNIQUE

La présente invention a trait à une pile à combustible à membrane échangeuse de protons, utilisant au niveau des compartiments cathodique et éventuellement anodique des enzymes de type oxydoréductase.

Le domaine général de l'invention est donc celui des piles à combustible à membrane échangeuse de protons.

### ETAT DE LA TECHNIQUE ANTERIEURE

Une pile à combustible comporte, généralement, un empilement de cellules élémentaires, au sein desquelles ont lieu des réactions électrochimiques avec deux réactifs qui sont introduits de manière continue. Le combustible, tel que l'hydrogène, pour les piles fonctionnant avec des mélanges hydrogène/oxygène ou le méthanol pour des piles fonctionnant avec des mélanges méthanol/oxygène, ainsi que l'éthanol pour des piles fonctionnant avec des mélanges éthanol/oxygène, est amené au contact de l'anode, alors que le comburant, généralement l'oxygène, est amené au contact de la cathode. L'anode et la cathode sont séparées par un électrolyte, de type membrane échangeuse d'ions. Les réactions électrochimiques, dont l'énergie est convertie en énergie électrique, se scindent en deux demi-réactions :
- une oxydation du combustible, se déroulant à l'interface anode/électrolyte produisant, dans le cas des piles à hydrogène des protons H+, qui vont traverser l'électrolyte en direction de la cathode, et produisant des électrons, qui rejoignent le circuit extérieur, afin de concourir à la production d'énergie électrique ;
- une réduction du comburant, se déroulant à l'interface électrolyte/cathode, avec production d'eau, dans le cas des piles à hydrogène/oxygène.

Ces deux réactions ont des cinétiques lentes, ce qui conduit à mettre en place des catalyseurs minéraux, tels que des catalyseurs métalliques à base de platine, au niveau des anodes et des cathodes, pour augmenter les cinétiques de ces réactions.

Toutefois, de tels catalyseurs sont d'une efficacité réduite à basse température, ce qui peut conduire à des difficultés de démarrage de la pile et peut amener à surcharger les électrodes de catalyseur, afin d'accélérer ledit démarrage. De plus, ces catalyseurs, principalement à base de métaux nobles, sont des produits onéreux et constituent des polluants potentiels de l'environnement.

Enfin, ces catalyseurs minéraux réalisent une activation de la réaction anodique tout à fait correcte, alors que la réaction cathodique reste encore difficile à catalyser par ce biais. La réaction cathodique constitue de ce fait une étape limitante au bon fonctionnement d'une pile à combustible.

Actuellement, les recherches portent, notamment en ce qui concerne les piles à diffusion gazeuse, essentiellement sur de nouveaux catalyseurs à base de métaux moins onéreux ou sur de nouvelles dispositions ou association de catalyseurs existants, afin d'augmenter la réactivité de ces catalyseurs. On précise que par pile à diffusion gazeuse, on entend, dans ce qui précède et ce qui suit, une pile pour laquelle le comburant et le combustible alimentent leurs compartiments respectifs directement sous forme d'un flux gazeux.

Dans le cas des piles fonctionnant en milieu aqueux, les recherches ont porté sur l'amélioration des cinétiques anodiques et cathodiques par l'utilisation d'organismes entiers tels que des bactéries, ou par l'utilisation de systèmes enzymatiques complexes greffés sur des électrodes, par exemple en platine ou en graphite. On entend par pile fonctionnant en milieu aqueux, dans ce qui précède et ce qui suit, une pile dont les compartiments anodiques et cathodiques sont remplis d'eau, le comburant et le combustible arrivant ainsi au niveau des ses compartiments respectifs sous forme dissoutes.

Ainsi, le document [1] : Journal of Electroanalytical Chemistry 464 (1999), pp 110-117, décrit l'utilisation d'une enzyme du type laccase, destinée à catalyser la réduction de l'oxygène en eau au niveau du compartiment cathodique d'une pile à combustible fonctionnant en milieu aqueux. Ce document précise que l'utilisation -d'-une laccase seule pour assurer la réduction de l'oxygène ne permet pas d'améliorer les densités de courant de la pile, dans la mesure où le transfert d'électrons entre la cathode et l'enzyme se fait selon une cinétique très lente. Afin de surmonter cet inconvénient, les auteurs ont eu recours à un médiateur électrochimique dissous dans l'électrolyte, qui assure un transfert rapide des électrons de la cathode vers le site actif de la laccase. Ce médiateur est le 2-2'-azinobis(3-éthylbenzothiazoline-6-sulfonate). Toutefois, ce médiateur est non seulement coûteux mais se dégrade également de façon prématurée du fait de la production de radicaux libres, lors du transfert d'électrons entre la cathode et le site actif de l'enzyme, via ledit médiateur.

Le document [2] : New J.Chem., 1999, pp. 481-487, décrit des piles à combustible utilisant comme combustible le glucose et comme comburant le peroxyde de cumène et mettant en jeu des surfaces d'électrode fonctionnalisées par un système enzymatique adéquat. Ainsi, du côté anodique, les auteurs ont greffé, à la surface de l'anode en contact avec le glucose, une monocouche comprenant un système enzymatique constitué d'un médiateur électrochimique noté MB⁺ associé à une coenzyme de type flavoprotéine, telle que FAD, elle-même associée à une glucose oxydase Gox. Ainsi, le glucose est oxydé, sous l'action de la glucose oxydase Gox en acide gluconique. Les électrons et les protons produits sont transférés successivement à la glucose oxydase associée à la coenzyme FAD pour donner un système réduit du type Gox-FADH₂, puis au médiateur pour donner MBH₂, qui enfin transfère les électrons au circuit extérieur, en direction du compartiment cathodique. De même, du côté cathodique, les auteurs ont greffé sur la surface de la cathode en contact avec le peroxyde de cumène une monocouche constituée d'une microperoxydase destinée à assurer la réduction du peroxyde de cumène.

Les surfaces fonctionnalisées de ces électrodes sont toutefois instables et difficiles à mettre en oeuvre dans le milieu industriel. De plus, l'utilisation de peroxyde de cumène en tant que comburant ne peut être envisagée à grande échelle.

Les réalisations de l'art antérieur présentent tous l'un ou plusieurs des inconvénients suivants:
- elles nécessitent l'utilisation d'une quantité importante de catalyseurs minéraux, pour catalyser la réaction cathodique ;
- elles nécessitent, lorsque une enzyme est utilisée, une fonctionnalisation complexe de la surface de la cathode, à laquelle l'enzyme doit être fixée pour accepter les électrons provenant de ladite cathode.

### EXPOSÉ DE L'INVENTION

Le but de la présente invention est donc de proposer une pile à combustible ne présentant pas les inconvénients susmentionnés.

Ainsi, les auteurs de la présente invention ont découvert, de manière surprenante, qu'en utilisant dans le compartiment cathodique d'une pile à
- combustible un catalyseur enzymatique particulier, il était possible de ne plus avoir recours à une fonctionnalisation de la surface des cathodes, et également de limiter, voire de supprimer totalement l'utilisation de catalyseurs minéraux de la réaction cathodique.

Pour ce faire, l'invention a pour objet une pile à combustible à membrane échangeuse de protons comprenant :
- un compartiment cathodique comprenant une cathode, un oxydant constitué par de l'oxygène et au moins un catalyseur enzymatique ;
- un compartiment anodique comprenant une anode, un combustible et au moins un catalyseur, lesdits compartiments anodique et cathodique étant disposés de part et d'autre de ladite membrane, ladite pile étant caractérisée en ce que ledit catalyseur enzymatique du compartiment cathodique est une enzyme de type oxydoréductase, ladite enzyme étant apte à catalyser l'oxydation d'un substrat adéquat et la réduction de l'oxygène en peroxyde d'hydrogène, ledit peroxyde d'hydrogène remplissant le rôle d'accepteur direct des électrons provenant de la cathode.

On précise que, selon l'invention, on entend par oxydoréductase une enzyme apte à catalyser une réaction d'oxydation d'un premier substrat (appelé substrat adéquat dans le cadre de l'invention) et une réaction de réduction d'un second substrat (constitué -par-de l'oxygène dans le cadre- de cette invention).

Comme énoncé précédemment, le catalyseur enzymatique de type oxydoréductase incorporé dans le compartiment cathodique catalyse la réaction d'oxydation d'un substrat adéquat et la réaction de réduction de l'oxygène en peroxyde d'hydrogène, ledit peroxyde d'hydrogène étant apte à accepter directement les électrons en provenance de la cathode sans qu'il faille recourir, par exemple, à un médiateur électrochimique quelconque.

Contrairement aux réalisations de l'art antérieur, où les catalyseurs enzymatiques présents dans le compartiment cathodique contribuaient à améliorer les cinétiques de transfert d'électrons entre la cathode et le comburant, le catalyseur enzymatique de type oxydoréductase de l'invention participe à la réaction de production de peroxyde d'hydrogène (correspondant dans le cadre de l'invention au comburant de la réaction cathodique), ce peroxyde d'hydrogène participant directement à la réaction cathodique en acceptant les électrons provenant de la cathode pour se réduire en eau. Dans la mesure où le catalyseur enzymatique spécifique de l'invention n'est plus impliqué dans le mécanisme d'acception des électrons de la cathode, ceci permet de simplifier grandement la conception de ladite cathode par rapport aux réalisations antérieures. Ainsi, il n'est plus nécessaire de créer de liens électroniques entre la cathode et l'enzyme, la création de tels liens nécessitant un parfait contrôle de l'état de surface de la cathode et des conditions opératoires (nature de 1'électrolyte, par exemple) pour permettre l'adsorption, par exemple, de l'enzyme à la surface de la cathode.

De plus, les catalyseurs enzymatiques, selon l'invention, favorisent une catalyse de la réduction de l'oxygène en eau oxygénée et d'oxydation d'un substrat adéquat à température ambiante, ce qui conduit à faciliter le démarrage de la pile à combustible. Enfin, la catalyse des réactions susmentionnées, engendrée par les catalyseurs enzymatiques selon l'invention, diminue à partir d'un certain seuil de température. Ainsi, lorsqu'une température ne doit pas être dépassée, on peut choisir une enzyme oxydoréductase adéquate, susceptible de réagir de manière plus limitée à une température donnée. La mise en oeuvre de la présente invention peut permettre ainsi d'avoir une sécurité intrinsèque de la pile, en ayant recours à une enzyme donnée.

La catalyse enzymatique, selon l'invention, est également parfaitement réglable. En effet, les réactions susmentionnées ne seront catalysées que, si l'on ajoute, dans le compartiment cathodique, le substrat adéquat et de l'oxygène, le substrat adéquat correspondant au glucose, lorsque l'oxydoréductase correspond à la glucose oxydase. Il est alors envisageable de régler cet ajout en fonction des besoins de l'utilisateur de la pile.

Enfin, le fait d'utiliser des enzymes, n'intervenant pas dans l'acceptation des électrons provenant de la cathode, peut permettre de remplacer les électrodes classiquement utilisées dans les réalisations antérieures (telles que les électrodes en graphite ou en métaux nobles, tels que le platine et l'or) par des électrodes en matériaux ou alliages industriels comme les aciers inoxydables, les alliages d'aluminium, de nickel ou de titane ou en matériaux polymères conducteurs. De préférence, la cathode de l'invention est en acier inoxydable.

De plus, les catalyseurs enzymatiques selon l'invention présentent l'avantage d'être peu coûteux et de ne pas se dégrader de façon prématurée.

Comme énoncé précédemment, les enzymes, selon l'invention, aptes à réduire le dioxygène sont des oxydoréductases, qui, selon la nomenclature en vigueur, sont identifiées par un nombre EC du type EC 1.X.3.Y, avec 1 désignant la classe des oxydoréductases, X caractérisant le substrat donneur d'électrons, 3 désignant l'oxygène comme substrat accepteur d'électrons, Y désignant spécifiquement une enzyme, qui rentre dans la sous-classe définie par les trois nombres précédents. Il est entendu que, selon l'invention, ces enzymes devront catalyser la réduction de l'oxygène en peroxyde d'hydrogène.

En plus d'assurer une réduction de l'oxygène en peroxyde d'hydrogène, on peut envisager, selon l'invention, des enzymes de type oxydoréductase aptes, en outre, par réaction avec ledit substrat adéquat, à engendrer une acidification du compartiment cathodique, cette acidification facilitant la réduction de l'oxygène en peroxyde d'hydrogène puis la réduction du peroxyde d'hydrogène en eau à la surface de la cathode. Ce phénomène est particulièrement avantageux dans le cas où la cathode est en acier inoxydable, dans la mesure où l'acidification du compartiment cathodique peut permettre d'activer la surface de la cathode, en vue de faciliter la réduction du peroxyde d'hydrogène en eau.

Par exemple, les enzymes de type oxydoréductase peuvent être choisies dans le groupe constitué par la galactose oxydase, la glucose oxydase, la pyruvate oxydase, la glutamate oxydase, des alcools oxydases. Pour ces enzymes susmentionnées, il est entendu que les substrats adéquats sont respectivement le galactose pour la galactose oxydase, le glucose pour la glucose oxydase, le pyruvate pour la pyruvate oxydase, le glutamate pour la glutamate oxydase, un alcool pour les alcools oxydases.

Les nombres EC de ces enzymes sont respectivement EC 1.1.3.4 pour la glucose oxydase, EC 1.1.3.9 pour la galactose oxydase, EC 1.2.3.3 pour la pyruvate oxydase, EC 1.4.3.7 pour la glutamate oxydase.

De préférence, l'enzyme de type oxydoréductase utilisée dans le compartiment cathodique est la glucose oxydase.

Pour la glucose oxydase, le site actif de celle-ci engendre l'oxydation du substrat glucose en glucono-1,4-lactone qui est hydrolysé par la suite en acide gluconique. De manière concomitante, le même site actif engendre la réduction de l'oxygène en peroxyde d'hydrogène qui est ensuite réduit en eau par les électrons arrivant de la cathode, l'acidification du compartiment cathodique par l'acide gluconique favorisant ces deux réductions successives.

La glucose oxydase présente, également, l'avantage de permettre de constituer une sécurité intrinsèque de la pile, dans la mesure où la glucose oxydase n'est plus active aux environs de 70°C. Elle est donc particulièrement intéressante pour les applications mettant en oeuvre une pile, selon la présente invention, où cette température ne doit pas être dépassée.

Pour le compartiment anodique, la catalyse de la réaction anodique (c'est-à-dire la réaction d'oxydation d'un combustible) peut être réalisée par tout type de catalyseurs, y compris des catalyseurs métalliques.

Toutefois, de manière très avantageuse, le catalyseur du compartiment anodique est, selon l'invention, une enzyme apte à catalyser l'oxydation d'un substrat adéquat, ledit substrat assurant la fonction de combustible.

De façon préférentielle, l'enzyme du compartiment anodique est apte, en outre, par réaction avec ledit substrat, à assurer une acidification du compartiment anodique.

De la même façon que pour le compartiment cathodique, le fait d'utiliser une enzyme, en tant que catalyseur, permet de limiter, voire de supprimer, la charge en catalyseurs minéraux.

Ainsi, l'enzyme du compartiment anodique peut être choisie dans le groupe constitué par des hygrogénases, la glucose oxydase, la galactose oxydase, des alcools oxydases. Il est entendu que les substrats pour la liste d'enzymes citées sont respectivement l'hydrogène, le glucose, le galactose, les alcools adéquats.

On note que certaines de ces enzymes, telles que la glucose oxydase, consomment du dioxygène pour fonctionner. De ce fait, il ne sera pas nécessaire de purger ledit compartiment de son dioxygène, comme c'est le cas lorsque l'hydrogène remplit le rôle de combustible.

Avantageusement, selon l'invention, l'enzyme du compartiment anodique est la glucose oxydase et le combustible le glucose.

L'oxydation du glucose par cette enzyme produit de la glucono-1,4-lactone, qui est hydrolysé en acide gluconique, libérant ainsi des protons, nécessaires au fonctionnement de la pile. Ces protons sont véhiculés, notamment, en direction du compartiment cathodique via la membrane échangeuse de protons.

On précise que, dans la mesure où l'enzyme du compartiment anodique selon l'invention participe, quant à elle directement à la réaction anodique, à savoir au transfert d'électrons du combustible à l'anode, cet enzyme est avantageusement immobilisée à la surface de l'anode. L'immobilisation de l'enzyme peut être effectuée par des méthodes classiques connues de l'homme du métier telles qu'une simple adsorption, une réaction de co-réticulation avec du glutaraldéhyde, l'inclusion dans les membranes de polymère de type Nafion ou dans des couches de tensio-actifs déposés sur l'anode, des interactions électrostatiques avec des polyions adsorbés à la surface-de l'anode, le greffage par liaison covalente.

L'utilisation d'un tel système présente l'avantage, également de ne plus avoir recours à l'hydrogène, qui peut poser des problèmes d'approvisionnement et de sécurité.

La présente invention peut s'appliquer aussi bien à des piles à diffusion gazeuse qu'à des piles fonctionnant en milieu aqueux.

Concernant l'introduction des catalyseurs enzymatiques et des substrats au niveau des compartiments d'électrode (c'est-à-dire anodique et cathodique), diverses alternatives peuvent être envisagées.

Selon une première alternative, la ou les enzymes du compartiment anodique et/ou cathodique et le ou les substrats peuvent être introduits de manière continue ou discontinue dans les compartiments respectifs pendant le fonctionnement de la pile. Par exemple, pour une pile fonctionnant par diffusion gazeuse, les enzymes peuvent être introduites sous forme d'aérosols avec les substrats adéquats.

Selon une seconde alternative, la ou les enzymes du compartiment anodique et/ou cathodique sont adsorbées sur l'anode et/ou sur la cathode.

Enfin, pour les piles fonctionnant en milieu aqueux, la ou les enzymes sont, selon un mode particulier de réalisation, introduites directement dans le milieu aqueux des compartiments anodique et/ou cathodique, lors du montage de la pile.

L'invention va maintenant être décrite en référence aux exemples, donnés à titre illustratif et non limitatif.

### BRÈVE DESCRIPTION DES DESSINS

La figure 1 représente le schéma d'une pile, selon l'invention, fonctionnant en milieu aqueux.

La figure 2 représente le schéma d'une pile, selon l'invention, à diffusion gazeuse, avec catalyse de la réaction cathodique par la glucose oxydase.

### EXPOSÉ DÉTAILLÉ DE MODES DE RÉALISATION PARTICULIERS

### EXEMPLE 1.

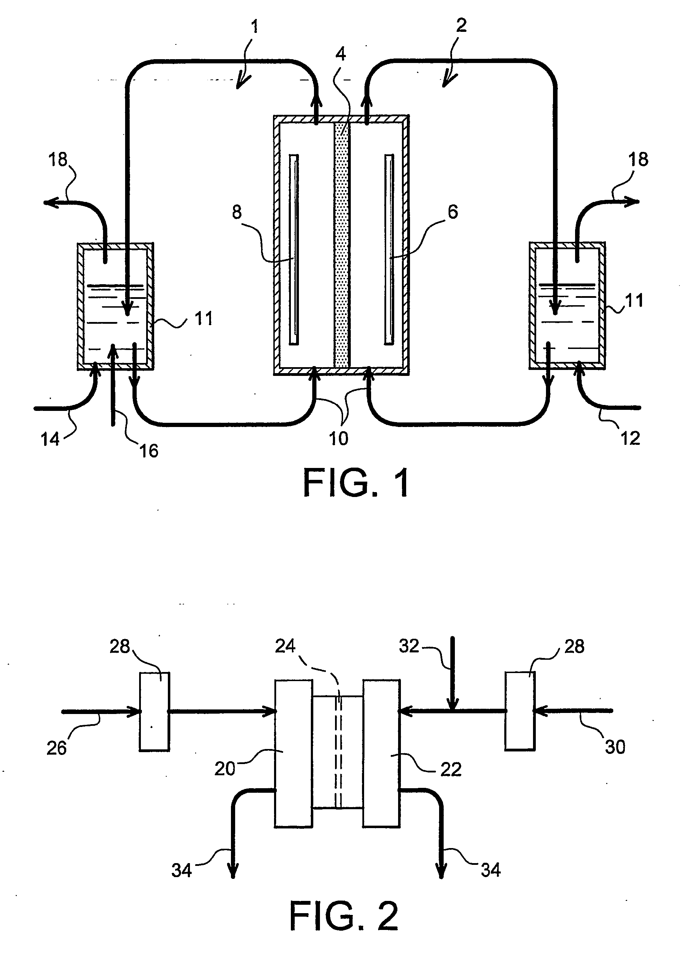

La pile mise en oeuvre, selon cet exemple, est une pile fonctionnant en milieu aqueux et est représentée sur la figure 1.

Cette pile présente respectivement un compartiment cathodique 1 et un compartiment anodique 2 séparés par une membrane échangeuse de protons 4. Les électrodes sont respectivement une grille en platine pour l'anode 6 et une plaque en acier inoxydable pour la cathode 8.

Un flux d'eau 10 provenant de réservoirs 11, lesdits flux étant préalablement saturés en dihydrogène pour le flux destiné au compartiment anodique 2 et en dioxygène pour le flux destiné au compartiment cathodique 1, arrive au niveau de chaque compartiment.

Selon cet exemple, la saturation du flux d'eau par du dihydrogène ou du dioxygène est effectuée par barbotage de ses gaz respectifs dans l'eau des réservoirs 11, lesdits gaz étant acheminés au niveau des réservoirs 11 par une arrivée de dioxygène 14 du côté cathodique et par une arrivée de dihydrogène 12 du côté anodique.

De plus, selon cet exemple, du glucose et de la glucose oxydase sont introduits au niveau du réservoir 11 du côté cathodique par l'intermédiaire d'une arrivée 16 positionnée à proximité de l'arrivée d'oxygène 14. Au niveau de chaque réservoir 11, des sorties 18 sont prévues pour assurer le renouvellement du milieu aqueux.

Dans de telles conditions et pour des concentrations en glucose de 24,4 mM et en glucose oxydase de 2,0 U/mL, la puissance fournie est 70 à 280 fois plus importante en présence de la glucose oxydase que sans, pour différentes valeurs de résistance électrique tel que présenté dans le tableau 1 ci-dessous.

**TABLEAU 1**

| Résistance | 1 Ω | 10 Ω | 100 Ω | 1000 Ω |
|---|---|---|---|---|
| Rapport (Puissance avec enzyme/puissance sans enzyme) | 280 | 260 | 170 | 70 |

### EXEMPLE 2.

La pile mise en oeuvre, selon cet exemple, est analogue à la pile de la figure 1 décrite précédemment.

Toutefois, la pile, selon cet exemple, diffère sur les points suivants :
- le glucose remplace le dihydrogène comme combustible, du côté anodique;
- l'anode 6 est en acier inoxydable
- la glucose oxydase est greffée directement à la surface de l'anode 6.

Ainsi, selon cet exemple, il n'est plus utile de recourir à l'utilisation d'un matériau noble pour la constitution de l'anode, du fait que la catalyse du côté anodique n'est plus assurée par des catalyseurs métalliques et on n'utilise plus de dihydrogène mais du glucose plus facile à manipuler.

### EXEMPLE 3.

La pile, mise en oeuvre, selon cet exemple, est représentée sur la figure 2.

Cette pile présente respectivement un compartiment anodique 20 et un compartiment cathodique 22 séparé par une membrane échangeuse de protons 24, l'anode et la cathode étant réalisée en graphite. Dans les deux compartiments, du platine (1mg/cm²) est utilisé. Le compartiment anodique 20 dispose d'une arrivée de dihydrogène 26 qui traverse préalablement à son introduction dans le compartiment un dispositif humidificateur 28, alors que le compartiment cathodique dispose d'une arrivée de dioxygène 30 traversant un dispositif humidificateur 28 et latéralement une arrivée de glucose et glucose oxydase 32. Ainsi, l'enzyme et son substrat sont injectés en fonctionnement, ce qui permet notamment de régler l'intensité de la catalyse de la réaction cathodique, donc le fonctionnement de la pile, en' modulant la quantité de glucose injecté. La catalyse de la réaction anodique est assurée par le platine. Au niveau de chaque compartiment, des sorties 34 sont prévues pour assurer le renouvellement du comburant et du combustible, des enzymes et substrats.

Dans la mise en oeuvre, l'arrivée 32 du glucose et de glucose oxydase est utilisée pour injecter 1 mL d'une solution contenant 20 mM de glucose et la teneur en glucose oxydase indiquée dans le tableau 2, en début de fonctionnement de la pile.

**TABLEAU 2.**

| Concentration en glucose oxydase | 0 unité/L | 1 unité/L | 10 unités/ L | 100 unités/L |
|---|---|---|---|---|
| Rapport (Puissance avec enzyme/puissance sans enzyme) | 1 | 1,15 | 1,15 | 1,28 |

On constate, que dans de telles conditions, l'addition d'enzymes permet d'augmenter la catalyse de la réaction cathodique et donc la puissance de la pile de 15 % (avec 1 ou 10 unités/L) à 28 % (avec 100 unités/L).

Ce résultat est remarquable dans la mesure où il démontre que l'addition d'enzyme permet d'améliorer les performances d'une pile qui utilise pourtant un catalyseur au platine à des quantités habituelles pour les piles commerciales.

### Références citées

[1] : Journal of Electroanalytical Chemistry 464 (1999), pp 110-117.
[2] : New J.Chem., 1999, pp. 481-487.

## Revendications

1. Pile à combustible à membrane échangeuse de protons comprenant :
- un compartiment cathodique comprenant une cathode, un oxydant constitué par de l'oxygène et au moins un catalyseur enzymatique ;
- un compartiment anodique comprenant une anode, un combustible et au moins un catalyseur, lesdits compartiments anodique et cathodique étant disposés de part et d'autre de ladite membrane, ladite pile étant **caractérisée en ce que** ledit catalyseur enzymatique du compartiment cathodique est une enzyme de type oxydoréductase, ladite enzyme étant apte à catalyser l'oxydation d'un substrat adéquat et la réduction de l'oxygène en peroxyde d'hydrogène, ledit peroxyde d'hydrogène remplissant le rôle d'accepteur direct des électrons provenant de la cathode.

2. Pile à combustible selon la revendication 1, **caractérisée en ce que** l'enzyme de type oxydoréductase est apte, en outre, par réaction avec ledit substrat adéquat, à engendrer une acidification du compartiment cathodique.

3. Pile à combustible selon les revendications 1 ou 2, **caractérisée en ce que** l'enzyme de type oxydoréductase du compartiment cathodique est choisie dans le groupe constitué par la galactose oxydase, la glucose oxydase, la pyruvate oxydase, la glutamate oxydase, des alcools oxydases.

4. Pile à combustible selon la revendication 3, **caractérisée en ce que** l'enzyme de type oxydoréductase est la glucose oxydase.

5. Pile à combustible selon l'une quelconque des revendications précédentes, **caractérisée en ce que** la cathode est en un matériau choisi dans le groupe constitué par les aciers inoxydables, les alliages d'aluminium, de nickel ou de titane, les polymères conducteurs

6. Pile à combustible selon l'une quelconque des revendications précédentes, **caractérisée en ce que** le catalyseur du compartiment anodique est une enzyme apte à catalyser l'oxydation d'un substrat adéquat, ledit substrat assurant la fonction de combustible.

7. Pile à combustible selon la revendication 6, **caractérisée en ce que** l'enzyme du compartiment anodique est apte, en outre, à assurer, par réaction avec ledit substrat adéquat, une acidification du compartiment anodique.

8. Pile à combustible selon les revendications 6 ou 7, **caractérisée en ce que** l'enzyme du compartiment anodique est choisie dans le groupe constitué par des hydrogénases, la glucose oxydase, la galactose oxydase, des alcools oxydases.

9. Pile à combustible selon la revendication 8, **caractérisée en ce que** l'enzyme du compartiment anodique est la glucose oxydase et le combustible le glucose.

10. Pile à combustible selon l'une quelconque des revendications précédentes, **caractérisée en ce que** la pile est une pile à diffusion gazeuse.

11. Pile à combustible selon l'une quelconque des revendications 1 à 9, **caractérisée en ce que** la pile est une pile fonctionnant en milieu aqueux.

12. Pile à combustible selon les revendications 10 ou 11, **caractérisée en ce que** la ou les enzymes du compartiment anodique et/ou cathodique et le ou les substrats sont introduits de manière continue ou discontinue dans leurs compartiments respectifs pendant le fonctionnement de la pile.

13. Pile à combustible selon les revendications 10 ou 11, **caractérisée en ce que** la ou les enzymes du compartiment anodique et/ou cathodique sont adsorbées sur l'anode et/ou sur la cathode.

14. Pile à combustible selon la revendication 11, **caractérisée en ce que** la ou les enzymes sont introduites directement dans le milieu aqueux des compartiments anodiques et/ou cathodiques, lors du montage de la pile.

## Claims

1. Proton exchange membrane fuel cell comprising:
- a cathodic compartment comprising a cathode, an oxidant consisting of oxygen and at least one enzyme catalyst;
- an anodic compartment comprising an anode, a fuel and at least one catalyst, said anodic and cathodic compartments being arranged at either end of said membrane, said cell being **characterised in that** said enzyme catalyst of the cathodic compartment is an oxidoreductase type enzyme, said enzyme being capable of catalysing the oxidation of suitable substrate and the reduction of oxygen into hydrogen peroxide, said hydrogen peroxide fulfilling the role of direct acceptor of the electrons from the cathode.

2. Fuel cell according to claim 1, **characterised in that** the oxidoreductase type enzyme is also capable, by means of a reaction with said suitable substrate, of carrying out acidification of the cathodic compartment.

3. Fuel cell according to claims 1 or 2, **characterised in that** the oxidoreductase type enzyme of the cathodic compartment is selected from the group consisting of galactose oxidase, glucose oxidase, pyruvate oxidase, glutamate oxidase, alcohol oxidases.

4. Fuel cell according to claim 3, **characterised in that** the oxidoreductase type enzyme is glucose oxidase.

5. Fuel cell according to any of the above claims, **characterised in that** the cathode is made of a material selected from the group consisting of stainless steels, aluminium, nickel or titanium alloys, conductive polymers.

6. Fuel cell according to any of the above claims, **characterised in that** the catalyst of the anodic compartment is an enzyme capable of catalysing the oxidation of a suitable substrate, said substrate serving as a fuel.

7. Fuel cell according to claim 6, **characterised in that** the enzyme of the anodic compartment is also capable of carrying out, by means of a reaction with said suitable substrate, acidification of the anodic compartment.

8. Fuel cell according to claims 6 or 7, **characterised in that** the enzyme of the anodic compartment is selected from the group consisting of hydrogenases, glucose oxidase, galactose oxidase, alcohol oxidases.

9. Fuel cell according to claim 8, **characterised in that** the enzyme of the anodic compartment is glucose oxidase and the fuel is glucose.

10. Fuel cell according to any of the above claims, **characterised in that** the cell is a gas diffusion cell.

11. Fuel cell according to any of claims 1 to 9, **characterised in that** the cell is a cell operating in an aqueous medium.

12. Fuel cell according to claims 10 to 11, **characterised in that** the enzyme(s) of the anodic and/or cathodic compartment and the substrate(s) are introduced continuously or discontinuously into their respective compartments during the operation of the cell.

13. Fuel cell according to claims 10 or 11, **characterised in that** the enzyme(s) of the anodic and/or cathodic compartment are adsorbed on the anode and/or on the cathode.

14. Fuel cell according to claim 11, **characterised** that enzyme(s) are introduced directly into the aqueous medium of the anodic and/or cathodic compartment, during the assembly of the cell.

## Patentansprüche

1. Brennstoffzelle mit Protonenaustauschmembran, die umfasst:
- ein Kathodenabteil, das eine Kathode, ein Oxidationsmittel, bestehend aus Sauerstoff, und mindestens einen enzymatischen Katalysator umfasst;
- ein Anodenabteil, das eine Anode, einen Brennstoff und mindestens einen Katalysator umfasst,
wobei die genannten Anoden- und Kathoden-Abteile beiderseits der genannten Membran angeordnet sind,
und die Brennstoffzelle **dadurch gekennzeichnet ist, dass**
der genannte enzymatische Katalysator des Kathodenabteils ein Enzym vom Oxydoreduktase-Typ ist, das in der Lage ist, die Oxidation eines geeigneten Substrats und die Reduktion von Sauerstoff zu Wasserstoffperoxid zu katalysieren, wobei das genannte Wasserstoffperoxid die Aufgabe erfüllt, die aus der Kathode stammenden Elektronen direkt aufzunehmen.

2. Brennstoffzelle nach Anspruch 1, **dadurch gekennzeichnet, dass** das Enzym vom Oxydoreduktase-Typ außerdem geeignet ist, durch Umsetzung mit dem genannten geeigneten Substrat eine Ansäuerung des Kathodenabteils herbeizuführen.

3. Brennstoffzelle nach Anspruch 1 oder 2, **dadurch gekennzeichnet, dass** das Enzym vom Oxydoreduktase-Typ des Kathodenabteils ausgewählt ist aus der Gruppe, die besteht aus Galactose-Oxidase, Glucose-Oxidase, Pyruvat-Oxidase, Glutamat-Oxidase und Alkohol-Oxidasen.

4. Brennstoffzelle nach Anspruch 3, **dadurch gekennzeichnet, dass** das Enzym vom Oxidoreduktase-Typ Glucose-Oxidase ist.

5. Brennstoffzelle nach einem der vorhergehenden Ansprüche, **dadurch gekennzeichnet, dass** die Kathode aus einem Material besteht, das ausgewählt ist aus der Gruppe, die besteht aus nicht rostenden Stählen, Aluminium-, Nickel- oder Titan-Legierungen und elektrisch leitenden Polymeren.

6. Brennstoffzelle nach einem der vorhergehenden Ansprüche, **dadurch gekennzeichnet, dass** der Katalysator des Anodenabteils ein Enzym ist, das in der Lage ist, die Oxidation eines geeigneten Substrats zu katalysieren, wobei das genannte Substrat die Funktion eines Brennstoffs erfüllt.

7. Brennstoffzelle nach Anspruch 6, **dadurch gekennzeichnet, dass** das Enzym des Anodenabteils außerdem geeignet ist, durch Umsetzung mit dem genannten geeigneten Substrat eine Ansäuerung des Anodenabteils zu bewirken.

8. Brennstoffzelle nach Anspruch 6 oder 7, **dadurch gekennzeichnet, dass** das Enzym des Anodenabteils ausgewählt ist aus der Gruppe, die besteht aus Hydrogenasen, Glucose-Oxidase, Galactose-Oxidase und Alkohol-Oxidasen.

9. Brennstoffzelle nach Anspruch 8, **dadurch gekennzeichnet, dass** das Enzym des Anodenabteils Glucose-Oxidase ist und der Brennstoff Glucose ist.

10. Brennstoffzelle nach einem der vorhergehenden Ansprüche, **dadurch gekennzeichnet, dass** es sich dabei um eine Brennstoffzelle mit Gasdiffusion handelt,

11. Brennstoffzelle nach einem der Ansprüche 1 bis 9, **dadurch gekennzeichnet, dass** es sich dabei um eine Brennstoffzelle handelt, die in wässrigem Medium funktioniert.

12. Brennstoffzelle nach Anspruch 10 oder 11, **dadurch gekennzeichnet, dass** das Enzym oder die Enzyme des Anoden- und/oder Kathodenabteils und das Substrat oder die Substrate kontinuierlich oder diskontinuierlich in ihre jeweiligen Abteile während der Funktion der Brennstoffzelle eingeführt werden.

13. Brennstoffzelle nach Anspruch 10 oder 11, **dadurch gekennzeichnet, dass** das Enzym oder die Enzyme des Anoden- und/oder Kathodenabteils an der Anode und/oder der Kathode adsorbiert sind.

14. Brennstoffzelle nach Anspruch 11, **dadurch gekennzeichnet, dass** das Enzym oder die Enzyme direkt in das wässrige Medium der Anoden- und/oder Kathodenabteile beim Zusammenbau der Brennstoffzelle eingeführt wird (werden).
